# EUROPEAN PATENT APPLICATION

(11) **EP 4 145 180 A1**
(43) Date of publication of application: **08.03.2023**
(21) Application number: 20933814.4
(22) Date of filing: 28.04.2020
(51) Int. Cl.: G01S 19/28

(54) **MEASUREMENT DEVICE, MEASUREMENT METHOD, AND PROGRAM**

(71) Applicant: Nippon Telegraph And Telephone Corporation, Chiyoda-ku Tokyo 100-8116 (JP)
(72) Inventor: YOSHIDA, Seiji, Musashino-shi, Tokyo 180-8585 (JP)
(74) Representative: Murgitroyd & Company
(86) International application number: PCT/JP2020/018164
(87) International publication number: WO 2021/220420

(57) **Abstract**

A measurement device includes: an azimuth and inclination measurement unit that measures an azimuth and an inclination of an object including a GNSS antenna; an azimuth mask generation unit that generates an azimuth mask indicating a region blocked when viewed from the GNSS antenna in a region of an open space of a sky in accordance with the azimuth and the inclination of the object; and a positioning control unit that selects line-of sight satellite signals using the azimuth mask and causes an absolute position measurement unit to execute positioning or time synchronization using the line-of sight satellite signal.

## Description

### Technical Field

The present disclosure relates to a technique of performing positioning and time synchronization based on a GNSS with high accuracy.

### Background Art

In recent years, positioning and time synchronization using a navigation satellite system or the global navigation satellite system (GNSS) have been utilized in a wide range of applications.

In order to perform positioning and time synchronization of an object based on the GNSS, a GNSS antenna is mounted on the object, and processing of positioning and time synchronization is executed using GNSS satellite signals (hereinafter referred to as satellite signals) received by the GNSS antenna.

### Citation List

### Patent Literature

PTL 1: JP 2020-12650 A

### Summary of the Invention

### Technical Problem

The reception of a satellite signal in a line-of-sight state may be blocked by a structure or the like located in a vicinity of the installation position of a GNSS antenna. In that case, the satellite signal is not received at a required signal strength in the GNSS antenna or is received as non-line-of-sight satellite signals due to multipath in which reflection and diffraction are caused by a structure or the like located in the vicinity of the installation position of the GNSS antenna. A problem is that, as a result, positioning performance and time synchronization performance based on the GNSS deteriorate.

The present disclosure has been made in view of the above points, and an object thereof is to provide a technique that allows to perform positioning and time synchronization based on the GNSS with high accuracy even in a case where satellite signals are blocked by a structure or the like located in a vicinity of an installation position of a GNSS antenna.

### Means for Solving the Problem

According to the disclosed technique, there is provided a measurement device including: an azimuth and inclination measurement unit that measures an azimuth and an inclination of an object including a GNSS antenna; an azimuth mask generation unit that generates an azimuth mask indicating a region blocked when viewed from the GNSS antenna in a region of an open space of a sky in accordance with the azimuth and the inclination of the object; and a positioning control unit that selects line-of-sight satellite signals using the azimuth mask and causes an absolute position measurement unit to execute positioning or time synchronization using the line-of-sight satellite signals.

### Advantageous Effects of the Invention

According to the disclosed technology, a technique is provided that allows to perform positioning and time synchronization based on the GNSS with high accuracy even in a case where satellite signals are blocked by a structure or the like located in the vicinity of the installation position of the GNSS antenna.

### Brief Description of Drawings

Fig. 1 is a diagram illustrating a situation in which a satellite signal is blocked by a structure of an object.
Fig. 2 is a configuration diagram of a position measurement device according to a first embodiment.
Fig. 3 is a diagram illustrating an example of a method of determining an azimuth.
Fig. 4 is a diagram for describing mask data.
Fig. 5 is a diagram for describing mask data.
Fig. 6 is a diagram for describing mask data.
Fig. 7 is a diagram for describing mask data.
Fig. 8 is a flowchart illustrating operations of the position measurement device.
Fig. 9 is a diagram for describing an example of generating an azimuth mask.
Fig. 10 is a diagram for describing an example of generating an azimuth mask.
Fig. 11 is a diagram illustrating an example in which an object is placed on a slope.
Fig. 12 is a diagram illustrating an example in which an object is placed on a slope.
Fig. 13 is a diagram for describing an example of generating an azimuth mask.
Fig. 14 is a diagram illustrating an example in which an object is placed on a slope.
Fig. 15 is a configuration diagram of a position measurement device in Example 3.
Fig. 16 is a diagram for describing an example of calculating a position of a component.
Fig. 17 is a diagram for describing an example of calculating a position of a component.
Fig. 18 is a diagram illustrating an example of a hardware configuration of the device.

### Description of Embodiments

Hereinafter, an embodiment of the present disclosure (the present embodiment) will be described with reference to the accompanying drawings. The embodiment described below is a mere example, and an embodiment to which the present disclosure is applied is not limited to the following embodiment.

In the following description, a position, an azimuth, an inclination, and an elevation angle are assumed to be absolute relative to the Earth. These elements may be referred to as an absolute position, an absolute azimuth, an absolute inclination, and an absolute elevation angle. In a case where an object other than the Earth is used as a reference, these elements are described as a relative position, a relative azimuth, a relative inclination, and a relative elevation angle.

The object in the following description is not limited to a specific object, and examples of the object include an automobile, a railroad vehicle, a personal transporter, an automated guided vehicle (AGV), a construction machine, a heavy machine, and a drone.

### Outline of Embodiment

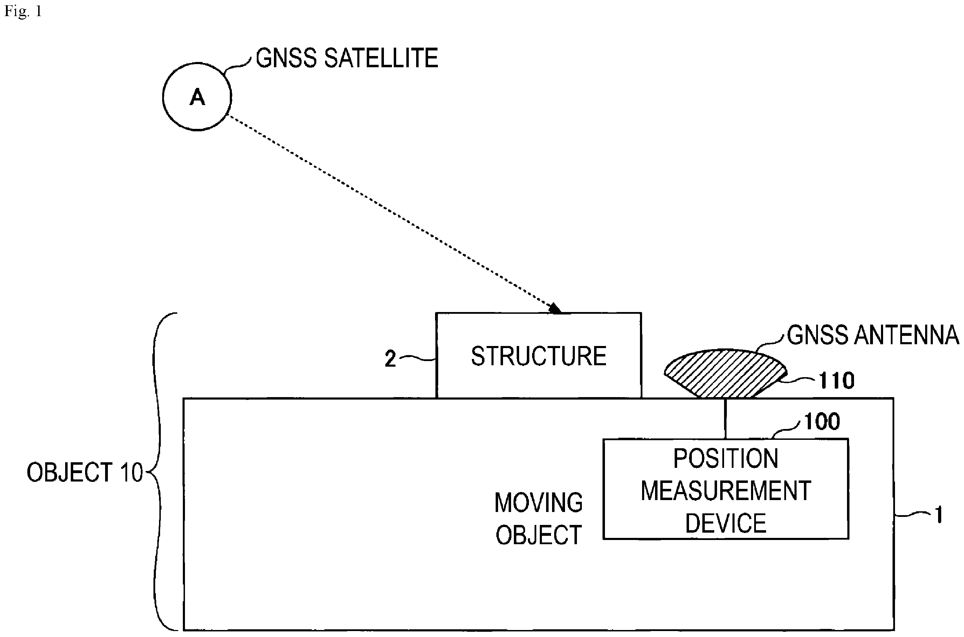

Fig. 1 illustrates an example of an object 10 according to an embodiment of the present disclosure. As illustrated in Fig. 1, the object 10 has a configuration in which a structure 2 is added to a moving object 1. In addition, the object 10 is provided with a position measurement device 100 to which a GNSS antenna 110 is connected. Note that, the position measurement device may be referred to as a "measurement device."

The object 10 is, for example, a vehicle. The structure 2 is mounted near the GNSS antenna 110, for example, on the roof of the vehicle.

In order for the position measurement device 100 to perform positioning and time synchronization with high accuracy, it is desirable that the GNSS antenna 110 receive line-of-sight satellite signals from many (at least four) GNSS satellites. The line-of-sight satellite signals are satellite signals that arrive directly from a GNSS satellite which is in a line-of-sight state at the position of the GNSS antenna 110.

However, as illustrated in Fig. 1, because a satellite signal from a GNSS satellite indicated by, for example, "A" is blocked by the structure 2, the satellite signal from "A" does not arrive at the GNSS antenna 110 directly, and is likely to arrive as non-line-of-sight satellite signals due to multipath in which reflection and diffraction are caused by a structure such as a building in the vicinity of the object 10. As a result, the accuracy of positioning and time synchronization performed by the position measurement device 100 deteriorates.

Accordingly, in the present embodiment, the position measurement device 100 generates an azimuth mask for masking a non-line-of-sight satellite signal (excluding the non-line-of-sight satellite signal from satellite signals to be used for positioning and time synchronization), masks the non-line-of-sight satellite signal with the azimuth mask, and performs processing of positioning and time synchronization using only the line-of-sight satellite signals. Note that, the improvement of the accuracy of positioning and time synchronization by using the azimuth mask is described in PTL 1. However, PTL 1 does not describe generation of an azimuth mask assuming a case where a satellite signal is blocked by a structure of a moving object 10, which is possible in the present embodiment.

Hereinafter, Examples 1 to 3 will be described as examples of specific configurations and operations in the present embodiment.

### Example 1

### Device Configuration

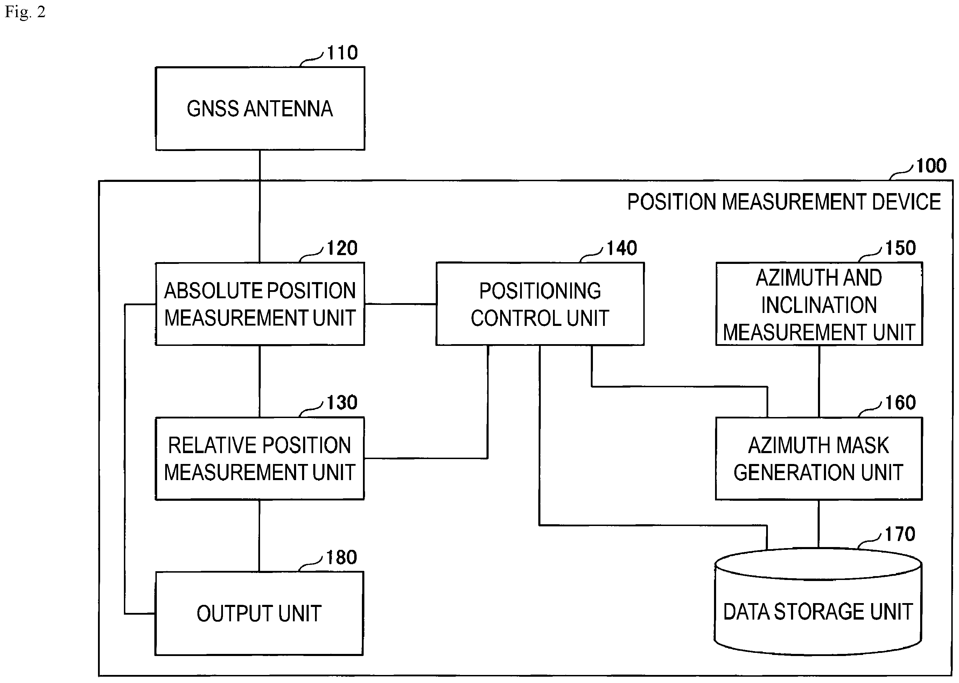

Fig. 2 illustrates a configuration example of the position measurement device 100 in Example 1. The position measurement device 100 in Example 1 includes the GNSS antenna 110, an absolute position measurement unit 120, a relative position measurement unit 130, a positioning control unit 140, an azimuth and inclination measurement unit 150, an azimuth mask generation unit 160, a data storage unit 170, and an output unit 180.

The GNSS antenna 110 receives radio waves transmitted from a GNSS satellite on the orbit and converts the radio waves into an electrical signal. This electrical signal may be referred to as a "satellite signal."

The GNSS antenna 110 and the absolute position measurement unit 120 are connected to each other via a cable, and the satellite signal is sent to the absolute position measurement unit 120 via the cable. In a case where a distance between the GNSS antenna 110 and the absolute position measurement unit 120 is long or a case where the satellite signal is branched, an amplifier may be provided between the GNSS antenna 110 and the absolute position measurement unit 120.

The absolute position measurement unit 120 receives the satellite signal and performs code positioning or carrier phase positioning (interferometric positioning). The absolute position measurement unit 120 is assumed to have a function of collecting observation data and position information of a reference station required for performing carrier phase positioning. In addition, the absolute position measurement unit 120 outputs time information time-synchronized with the absolute time with high accuracy by performing time synchronization using a satellite signal transmitted from a GNSS satellite equipped with an atomic clock whose time is precisely managed with respect to the absolute time. The absolute time as used herein is, for example, coordinated universal time (UTC). Note that the absolute position measurement unit 120 may perform only one of positioning or time synchronization.

The absolute time at which the satellite signal has been transmitted from the GNSS satellite can be known from the received satellite signal. However, an accurate absolute time cannot be obtained at the reception position unless a propagation time taken for the satellite signal to reach the position of the GNSS antenna 110 from the GNSS satellite is measured and a time offset value Δt between the time of the absolute position measurement unit 120 and the time of the satellite is further compensated for.

Accordingly, the absolute position measurement unit 120 performs positioning and time synchronization simultaneously by calculating four parameters of three-dimensional coordinate information (x, y, z) of the reception position and the time offset (Δt) using satellite signals from four or more GNSS satellites.

The absolute position measurement unit 120 outputs time information based on this absolute time through the output unit 180. For example, in a case where the object 10 is a base station in a mobile network, the base station can transmit a time division duplex (TDD) signal without interfering with an adjacent base station by receiving the time information synchronized with the absolute time, matching a time slot configuration (arrangement) of uplink and downlink signals in a TDD signal frame with that of the adjacent base station (synchronized with the absolute time), and synchronizing transmission timings of signal frames.

In addition, the absolute position measurement unit 120 receives information on the current line-of-sight satellite signals calculated based on the azimuth mask from the positioning control unit 140, excludes the non-line-of-sight satellite signals, and then performs processing of positioning and time synchronization using only the line-of-sight satellite signals. Processing of selecting the line-of-sight satellite signals from all the received satellite signals may be performed after pseudo-range calculation (code pseudo-range measurement or phase measurement) using the satellite signals is performed or may be performed before the pseudo-range calculation is performed.

Examples of the relative position measurement unit 130 include a vehicle speed pulse meter, an inertial measurement unit (IMU), an in-vehicle camera, a light detection and ranging (LiDAR), and a GNSS Doppler shift meter. The vehicle speed pulse meter indicates the speed of a vehicle, that is, a distance over which the vehicle travels per unit time. A three-dimensional angular velocity and acceleration are obtained by a three-axis gyro and a three-directional accelerometer mounted on the IMU. The relative position of the vehicle can be obtained from the movement of an object in image data captured by the in-vehicle camera. In the LiDAR, by irradiating a target while performing scanning with laser light and observing its scattering or reflected light, a distance to the target can be measured and the relative position of a vehicle can be obtained. In the GNSS Doppler shift meter, the relative displacement of the position of an object can be calculated by integrating a speed obtained by measuring a change in the frequency of the carrier wave over time. Note that, in Example 1, the relative position measurement unit 130 need not be provided.

The relative position measurement unit 130 may be a plurality of positioning units from among positioning units, such as the vehicle speed pulse meter, the IMU, the in-vehicle camera, the LiDAR, and the GNSS Doppler shift meter, or may be a single positioning unit. In a case where the relative position measurement unit 130 includes a plurality of positioning units, a mechanism may be provided to select and output the most accurate positioning result from among positioning results obtained by the plurality of positioning units, or a mechanism may be provided to couple all or some of the positioning results obtained by the plurality of positioning units using a Kalman filter or the like and output the result.

In addition, the relative position measurement unit 130 is supplied with a high-accuracy clock signal obtained by time synchronization with a GNSS signal from the absolute position measurement unit 120. Even in a case where the high-accuracy clock signal is interrupted, the relative position measurement unit 130 can maintain the accuracy of the clock signal through holdover (a free-running of an oscillator) without depending on time synchronization with the GNSS signal.

The positioning control unit 140 extracts line-of-sight satellite signals using the azimuth mask at the current point in time which is notified of by the azimuth mask generation unit 160, and transmits a notification of identification information (codes) of the line-of-signt signals to the absolute position measurement unit 120.

In addition, when a converged (fixed) solution for carrier phase positioning is unable to be obtained by the absolute position measurement unit 120, for example, in an urban canyon environment, the positioning control unit 140 switches the positioning unit to the relative position measurement unit 130 and executes control for continuing the positioning.

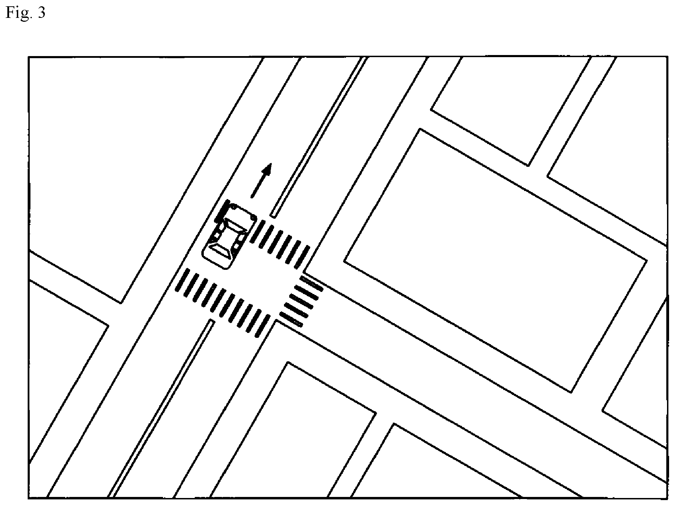

The azimuth and inclination measurement unit 150 measures the azimuth and the inclination of the object 10 in real time and transmits a notification of the measurement result to the azimuth mask generation unit 160. The azimuth and inclination measurement unit 150 may be achieved by any method. For example, the azimuth and inclination measurement unit 150 can be achieved by the following device or the like.
(1) An electronic compass equipped with a magnetic sensor or a geomagnetic direction sensor (GDS).
(2) A GNSS compass that includes two GNSS antennas and measures the azimuth and the inclination by measuring their relative positions.
(3) A gyroscope (such as a MEMS or an optical fiber gyro).
(4) Obtaining the azimuth and the inclination by calculating an integrated value of a measured value of a speed (Vx, Vy, Vz) measured by the Doppler shift of the GNSS satellite signal. For example, the measured value of the speed (Vx, Vy, Vz) measured by the Doppler shift is sent from the absolute position measurement unit 120 to the azimuth and inclination measurement unit 150, and the azimuth and the inclination are obtained from the speed or the relative displacement of the position of the object 10 which is obtained by the azimuth and inclination measurement unit 150 by integrating the speed over time.
(5) Obtaining the azimuth and the inclination from a temporal change in the GNSS positioning result. For example, the positioning result is sent from the absolute position measurement unit 120 to the azimuth and inclination measurement unit 150, and the azimuth and inclination measurement unit 150 obtains the azimuth and the inclination by calculating the temporal change in the position.
(6) Estimating the azimuth from the traveling direction of the moving object 1 and road information on a map. For example, the azimuth and inclination measurement unit 150 estimates the traveling direction based on the positioning result obtained from the absolute position measurement unit 120 and estimates the azimuth based on the road information in the map information which is read out from the data storage unit 170. For example, as illustrated in Fig. 3, the azimuth of the moving object 1 can be detected by detecting that the moving object 1 (vehicle) is on the left side (left lane) of the road on the drawing. In addition, the inclination can also be estimated by using three-dimensional map information.

The azimuth mask generation unit 160 generates an azimuth mask at the current point of time based on the azimuth and the inclination received from the azimuth and inclination measurement unit 150, and transmits the generated azimuth mask to the positioning control unit 140. The data storage unit 170 stores data of the mask (hereinafter referred to as mask data) created in advance, the map information, and the like.

The output unit 180 outputs the current position which is a positioning solution output from the positioning control unit 140 to the outside of the device. The current position is represented by three-dimensional coordinates of (x, y, z), but the output information may be three-dimensional coordinates themselves based on a geographical coordinate system or a projection coordinate system, or may be other information. For example, a control signal may be output to a control unit of an autonomous vehicle, or image information indicating a position on a map may be output. In addition, the output unit 180 can output time information time-synchronized with the absolute time to the outside of the device. A combination of a timing pulse and a time code or a communication interface such as that of a precision time protocol (PTP) is used to output the time information.

The position measurement device 100 in Example 1 (the same applies to Examples 2 and 3) may be one device which is physically integrated, or may be a device in which some functional units are physically separated from each other and the plurality of separated functional units are connected to each other through a network.

In addition, the position measurement device 100 may include all the functions illustrated in Fig. 2, or may be used with some functions (for example, a positioning and time synchronization processing function in the absolute position measurement unit 120) being provided on a network (on, for example, a cloud) and with the remaining functions being mounted in the position measurement device 100.

For example, observation data (also referred to as raw data) may be output from a GNSS carrier phase positioning receiver included in the position measurement device 100 and transmitted to a carrier phase positioning calculation processing functional unit provided on a cloud, so that the carrier phase positioning calculation may be performed on the cloud. In this case, the positioning calculation result is returned from the carrier phase positioning calculation processing functional unit on the cloud to the positioning control unit 140.

### Operation of Position Measurement Device

Next, the operation of the position measurement device 100 in Example 1 will be described. In Example 1, the position measurement device 100 generates an azimuth mask that dynamically masks non-line-of-sight satellite signals, masks the non-line-of-sight satellite signals by using the azimuth mask, and executes processing of positioning and time synchronization using only line-of sight satellite signals. This improves the accuracy of positioning and time synchronization based on a GNSS.

First, in preparation, mask data is created in which the shape of the structure 2 of the object 10 in the vicinity of the installation position of the GNSS antenna 110 is reflected on a sky plot.

The mask data may be any type of data that can represent the shape of the structure 2 of the object 10 (a region where the open space in the sky is blocked). However, in Example 1, the mask data is a series of data of a combination of (a relative azimuth angle, a relative elevation angle) indicating the shape of the structure 2 of the object 10 on the sky plot. Here, the relative azimuth angle and the relative elevation angle are an azimuth angle and an elevation angle relative to the structure of the object 10 on which the GNSS antenna 110 is installed. In addition, the mask data can be obtained, for example, by identifying a region where the open space in the sky is blocked from data of a sky image captured at the installation position (phase center position) of the GNSS antenna 110 through image processing or the like.

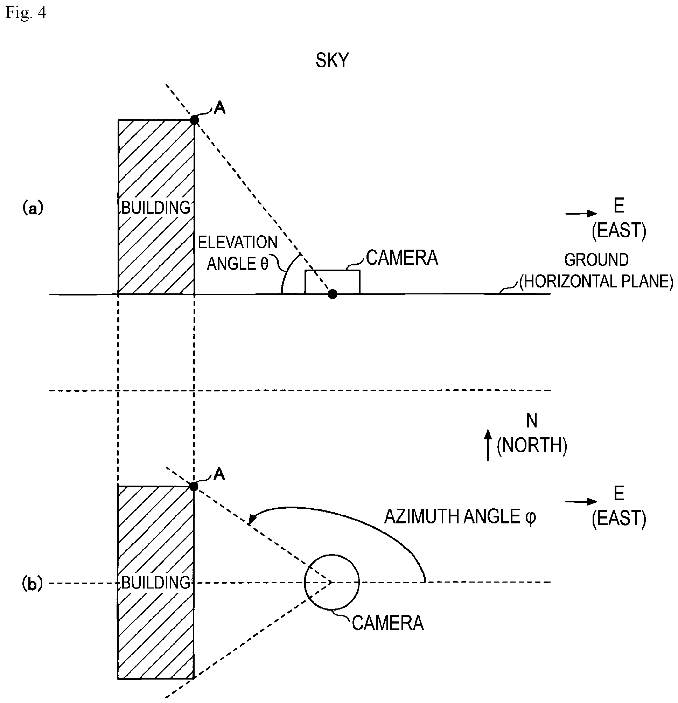

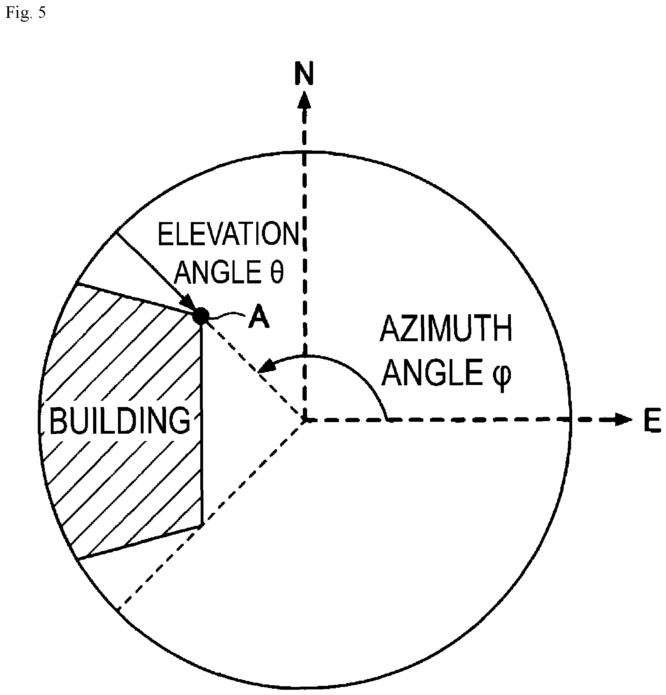

An example of the mask data will be described with reference to Figs. 4 to 7. Fig. 4(a) is a side view of a building built on the ground (horizontal plane) when viewed from the south. In addition, Fig. 4(b) is a plan view of the building from above (in a zenith direction). As illustrated in Figs. 4(a) and 4(b), a camera capable of capturing an image of a semi-celestial sphere (360 degrees in a horizontal direction and 0 to 90 degrees in an elevation angle) is installed and captures a sky image with the optical axis of the camera directed toward a zenith direction. The captured image is an image as illustrated in Fig. 5.

Figs. 4(a) and 4(b) illustrate a point A in the corner of the building. As illustrated in Fig. 4(a), the elevation angle θ with respect to the point A is an angle between the horizontal plane and the line of sight when the point A is viewed from a reference point (here, a camera installation position) on the horizontal plane. As illustrated in Fig. 4(b), in a case where the reference direction (here, east) is set to 0 degree when the line of sight from the reference point to the point A is viewed from above, the azimuth angle ϕ is a counterclockwise rotation angle from the reference direction to the line of sight.

The actual elevation angle θ illustrated in Fig. 4(a) corresponds to a length from the outer circumference (horizontal line) of the circle to the point A on the line of the radius passing through the point A in the sky image illustrated in Fig. 5 (the point A reflected in the image). In addition, the actual azimuth angle ϕ illustrated in Fig. 4(b) is a counterclockwise rotation angle to the line of the radius in a case where the reference direction (here, east) on the sky image of Fig. 5 is set to 0 degree.

As described above, when viewed from the reference point, each of the all points of the shape of an object seen above the horizontal line can be represented by a set of an elevation angle and an azimuth angle. The points on the sky image corresponding to the same elevation angle form a concentric circle, and the ratio of its diameter to the diameter of the sky image differs according to a projection method of a lens which is used when the sky image is captured.

In Example 1, the above reference point in the mask data is the phase center of the GNSS antenna 110, the camera is placed there, and mask data is created from the sky image data obtained by capturing an image of the upper hemisphere. However, in Figs. 4 and 5, although the elevation angle and the azimuth angle relative to the Earth such as the horizontal plane and "east" are used, the mask data of Example 1 represents a region where the open space is blocked by the structure 2 using the relative elevation angle and the relative azimuth angle relative to the object 10.

In the mask data of Example 1, for example, the horizontal plane that is a reference of the relative elevation angle is a plane (that is not real but virtual) fixed to the roof portion of the object 10, and the reference of the relative azimuth angle (direction in which the azimuth angle is 0 degree) is the front of the object 10 (in the case of a car, the traveling direction when it goes straight).

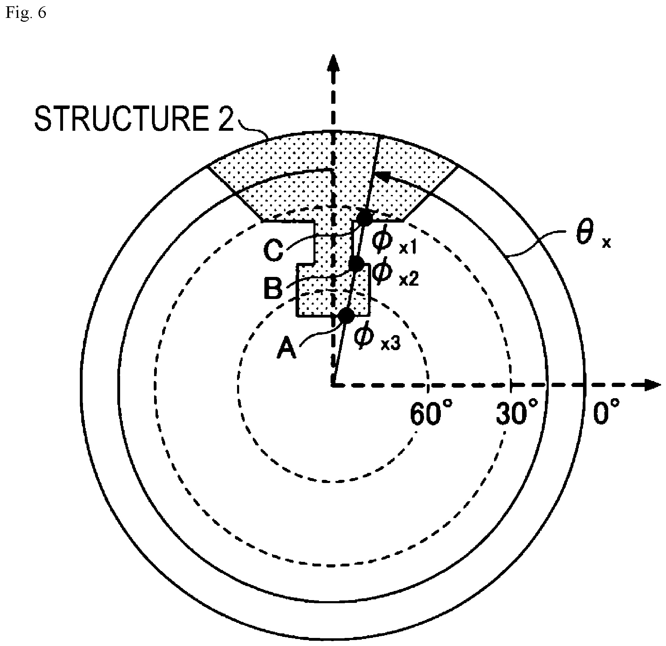

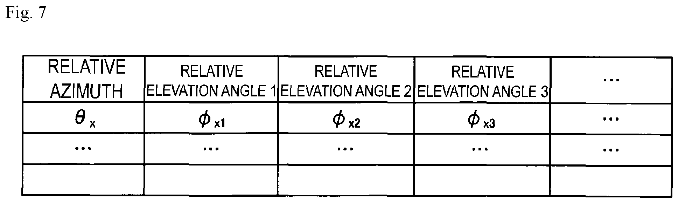

A specific example of the mask data will be described with reference to Figs. 6 and 7. The example illustrated in Fig. 6 is a diagram equivalent to a sky image obtained by capturing an image of the sky with a camera installed at the phase center of the GNSS antenna 110 attached to the object 10.

Fig. 6 illustrates the shape of the shaded portion as the shape of the structure 2 of the object 10 when viewed from the installation position (phase center) of the GNSS antenna 110. Fig. 6 illustrates the relative azimuth angle and the relative elevation angle of a certain portion in the shape of the structure 2 with the virtual plane fixed to the object 10 as a reference of the relative elevation angle and with the front of the object 10 as a reference of the relative azimuth angle. That is, a point A = (θx, ϕx3), a point B = (θx, ϕx2), and a point C = (θx, ϕx1) are illustrated as the portion at the relative azimuth angle θx relative to the object 10.

Fig. 7 illustrates an example of the mask data of the shape including this portion. Fig. 7 illustrates that, in the portions whose relative azimuth angle is θx, the portion whose relative elevation angle is from 0 to ϕx1 is a shielding region (a region where the field of view is blocked by the structure 2), the portion whose relative elevation angle is from ϕx1 to ϕx2 is an open space (a region where the field of view is not blocked by the structure 2), and the portion whose relative elevation angle is from ϕx2 to ϕx3 is a shielding region.

The shielding region and the open space of the entire sky can be represented by executing, on a per Δθ basis, representation of the shielding region and the open space by using the relative elevation angle ϕ, such as from θ = 0, θ = Δθ, θ = 2Δθ ... (e.g., Δθ = 1 degree).

In Example 1, the azimuth mask having "the azimuth angle and the elevation angle" corresponding to the azimuth and the inclination of the object 10 at the current time point is generated by converting "the relative azimuth angle and the relative elevation angle" with the object as the reference into "the azimuth angle and the elevation angle" with the Earth as the reference by using the azimuth and the inclination of the object with the Earth as the reference.

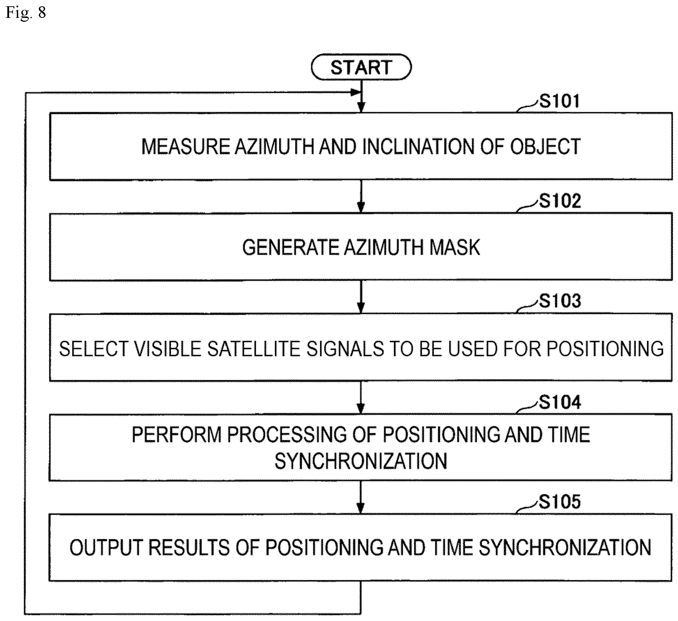

An operation example of the position measurement device 100 will be described according to the procedure of the flowchart of Fig. 8.

In S101, the azimuth and inclination measurement unit 150 measures the azimuth and inclination of the object 10. In S102, the azimuth mask generation unit 160 generates an azimuth mask at the current time (current point in time) by calibrating the mask data stored in the data storage unit 170 using the azimuth and inclination measured in S101.

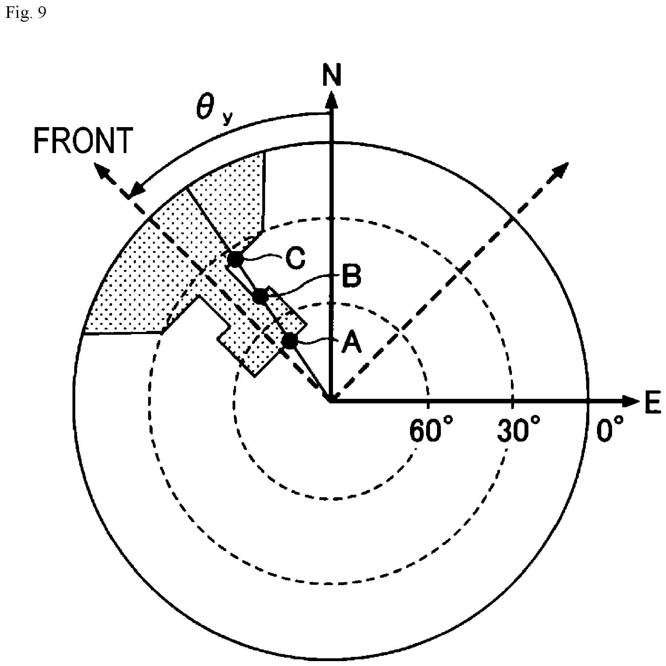

For example, assuming that the plane serving as a reference of the relative elevation angle is a horizontal plane, that the inclination of the object 10 is 0 degree (no change from the horizontal plane), and that the azimuth of the object 10 (direction in which the object 10 moves forward) is a counterclockwise azimuth angle θy from north, as illustrated in Fig. 9, (the azimuth angle, the elevation angle) of the point A, the point B, and the point C in the azimuth mask are (θx + θy, ϕx3), (θx + θy, ϕx2), and (θx + θy, ϕx1), respectively. That is, in this case, data of the azimuth mask is obtained by changing θx in the mask data illustrated in Fig. 7 to θx + θy.

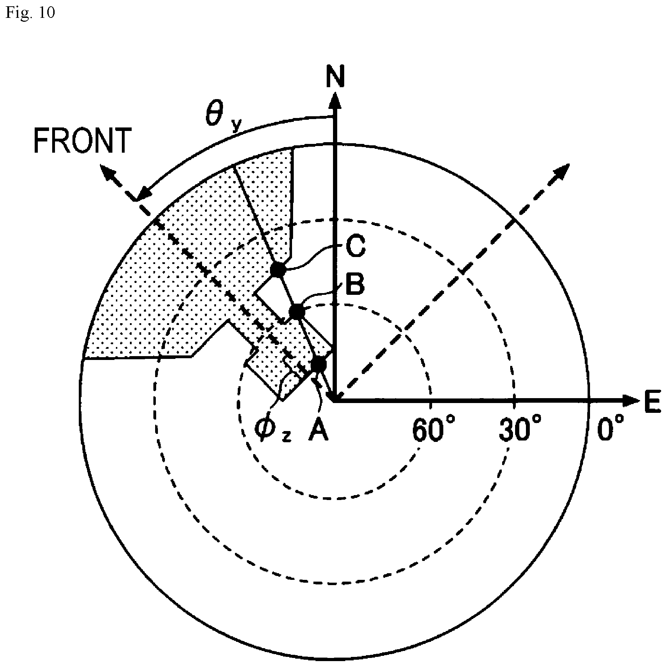

Next, a situation in which the object 10 goes uphill is assumed. It is assumed that the azimuth of the object 10 is θy as described above, and that the inclination of the object 10 (inclination in which the front of the object 10 is higher than the rear) is cpz. In this case, as illustrated in Fig. 10, (the azimuth angle, the elevation angle) of the point A, the point B, and the point C in the azimuth mask are (θx + θy, ϕx3 + ϕz), (θx + θy, ϕx2 + ϕz), and (θx + θy, ϕx1 + (pz), respectively. Note that, for convenience, the elevation angle is defined as an angle obtained by adding ϕz to the relative elevation angle of the mask data. Since the azimuth and inclination measurement unit 150 accurately detects the inclinations of three axes, the azimuth mask generation unit 160 can calculate accurate (the azimuth angle, the elevation angle).

In S103, the positioning control unit 140 extracts line-of-sight satellite signals by filtering out non-line-of-sight satellite signals from received satellite signals based on data of the azimuth mask and the position (the azimuth, the elevation angle) of a satellite on the celestial sphere seen from the position of the object 10 based on the position of the object 10 obtained from outputs of the absolute position measurement unit 120 and the relative position measurement unit 130, the azimuth mask generated in S103, and orbital data of each GNSS satellite signal, and selects the line-of-sight satellite signals as satellite signals to be used for positioning and time synchronization. Here, for example, in the case of a GPS satellite, because it orbits approximately 20,000 km above the ground, the influence of the position error of the object 10 on the estimation error of the satellite position (the azimuth, the elevation angle) is extremely small. Accordingly, the accuracy of the position of the object 10 used in this case is sufficient with the accuracy obtained by code positioning.

For example, it is assumed that a region of a quadrangle surrounded by four points represented by (the azimuth angle, the elevation angle) = (θ1, ϕ1), (θ2, ϕ2), (θ3, ϕ3), and (θ4, ϕ4) indicates a region where the sky is blocked by the structure 2 at a certain time. In this case, it is assumed that, at this time, a GNSS satellite S is in a direction represented by ((θ1 + θ2 + θ3 + θ4)/4, ϕ1 + ϕ2 + ϕ3 + ϕ4)/4) when viewed from the phase center of the GNSS antenna 110. In this case, because ((θ1 + θ2 + θ3 + θ4)/4, (ϕ1 + ϕ2 + ϕ3 + ϕ4)/4) indicates a point in the above quadrangle, it can be understood that the satellite signal transmitted from the GNSS satellite S is blocked by the structure 2.

In this way, by using the azimuth mask, it is possible to determine which satellite signal is received as a line-of-sight satellite signal at a certain reception position at a certain time.

Note that, the orbital data of the GNSS satellite may be acquired from navigation message data (almanac, ephemeris) of the GNSS satellite signal, may be acquired from a secure user plane location (SUPL) server through a mobile communication network by an assisted GNSS (A-GNSS), or may be acquired from a site on the Internet. In any case, when there is orbital data of the GNSS satellite, it is possible to calculate the position (the azimuth angle, the elevation angle) of the GNSS satellite in the sky at that time when viewed from the current position of the object 10.

The positioning control unit 140 transmits a notification of identification information (code) of the selected line-of-sight satellite signals to the absolute position measurement unit 120.

In S104, the absolute position measurement unit 120 executes processing of positioning and time synchronization using the line-of-sight satellite signals notified of by the positioning control unit 140. In S105, the output unit 180 outputs position information which is a positioning result and time information which is synchronized with the absolute time with high accuracy.

Note that, in S103, the received quality (carrier-to-noise ratio (CNR) or signal-to-noise ratio (SNR)) of a satellite signal determined as a line-of-sight satellite signal based on the azimuth mask may be measured. For example, in a case where a threshold for received quality is set and the received quality measured by the absolute position measurement unit 120 is equal to or less than the threshold, even if a satellite signal is determined to be a line-of-sight satellite signal based on the azimuth mask, the satellite signal may be regarded as a non-line-of-sight satellite signal and excluded from the satellite signals to be used for positioning and time synchronization in S104.

According to Example 1, even in a case where a satellite signal is blocked by a structure or the like in the vicinity of the installation position of the GNSS antenna 110, it is possible to perform positioning and time synchronization with high accuracy.

### Example 2

In Example 2, differences from Example 1 will be described. In Example 1, an azimuth mask corresponding to the structure 2 which is a portion of the object 10 is generated, and line-of sight satellite signals are selected using the azimuth mask. The azimuth mask can be applied without being limited to such an example.

As an example of the object 10, a mowing robot 10 that includes the position measurement device 100 including the GNSS antenna 110 and performs automatic traveling and mowing while estimating its own position will be described. When the mowing robot 10 travels on a slope, a satellite signal may be blocked by the slope, and the performance of positioning and time synchronization may deteriorate.

Accordingly, in Example 2, when the azimuth and inclination measurement unit 150 detects the inclination of the mowing robot 10, the azimuth mask generation unit 160 generates an azimuth mask with the inclination as an elevation angle.

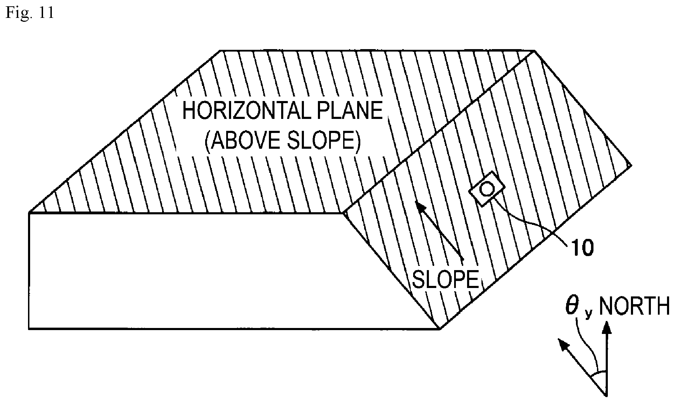

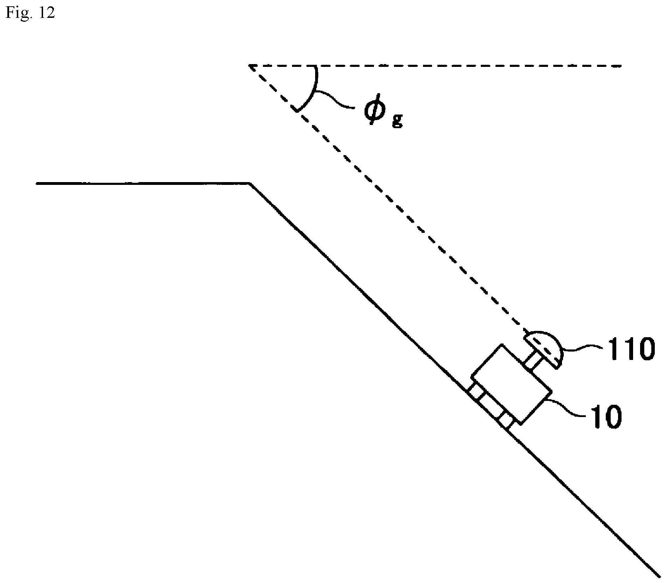

For example, as illustrated in Fig. 11, it is assumed that the mowing robot 10 performs mowing work while traveling on a slope such that the inclination becomes maximum in the direction of the azimuth angle θy relative to the north. In addition, it is assumed that the maximum inclination is cpg as illustrated in Fig. 12.

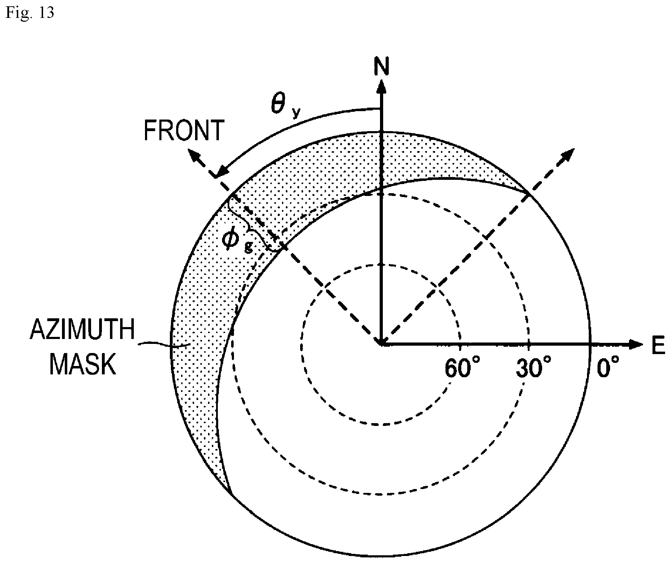

In this case, when the azimuth and inclination measurement unit 150 detects that the inclination in the direction of the azimuth angle θy is cpg, the azimuth mask generation unit 160 generates an azimuth mask having a width of 180 degrees centered on θy in which the elevation angle from the horizontal plane (the elevation angle is 0 degree) at the azimuth angle θy is cpg, for example, as illustrated in Fig. 13.

The positioning control unit 140 selects line-of sight satellite signals excluding the non-line-of-sight satellite signals masked by the azimuth mask, and transmits a notification of information on the selected line-of sight satellite signals to the absolute position measurement unit 120. The absolute position measurement unit 120 performs processing of positioning and time synchronization using the line-of sight satellite signals selected by the positioning control unit 140.

As illustrated in Fig. 12, in a case where a slope continues above the mowing robot 10, a satellite signal in the azimuth of the azimuth mask is actually blocked by the slope.

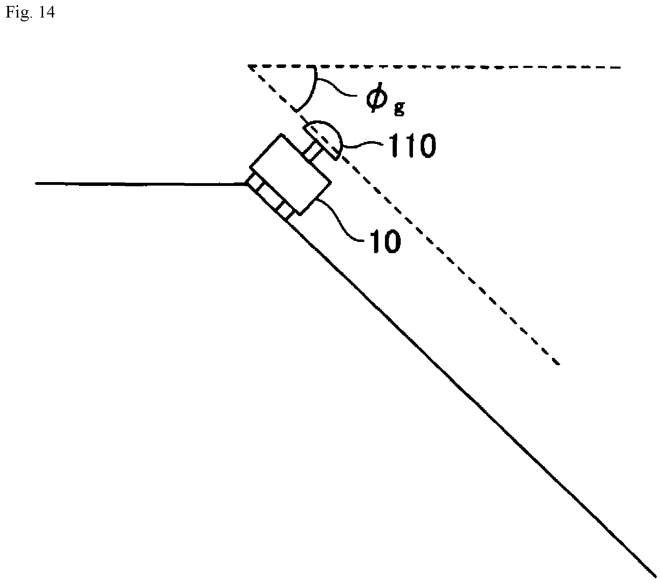

In contrast, as illustrated in Fig. 14, in a case where the mowing robot 10 is located at an upper portion of the slope, the mowing robot 10 is inclined, but the satellite signal is not blocked by the slope.

In consideration of such a case, in Example 2, the received quality (CNR or SNR) of the satellite signal determined as a non-line-of-sight satellite signal by the azimuth mask is measured. For example, in a case where a threshold for reception quality is set and the received quality measured by the absolute position measurement unit 120 is equal to or higher than the threshold, even if a satellite signal is determined to be a non-line-of-sight satellite signal by the azimuth mask, the satellite signal is regarded as a line-of sight satellite signal and used for positioning and time synchronization. This is equivalent to a case in which the azimuth mask is not configured.

Note that, even in a case where the open space is not limited by the slope as illustrated in Fig. 14, the received quality of the satellite signal at an angle that is less than or equal to the elevation angle corresponding to the inclination may deteriorate. This occurs, for example, in a case where the GNSS antenna 110 has vertical directivity. The azimuth mask used at this time is equivalent to an azimuth mask indicating a region where the received quality of the GNSS antenna 110 deteriorates due to the inclination of the object 10 caused by the slope.

In this regard, in a case where the GNSS antenna 110 having omni-directivity is used, the open space is not limited by the slope as illustrated in Fig. 14, and, thus, the received quality of the satellite signal at an angle that is less than or equal to the elevation angle corresponding to the inclination does not deteriorate.

Note that, Example 1 and Example 2 may be combined. In this case, the azimuth mask generation unit 160 generates an azimuth mask A based on the structure 2 attached to the object 10 and an azimuth mask B based on the slope and outputs, as the azimuth mask, the logical sum of the azimuth mask A and the azimuth mask B (= a region where the azimuth mask A and the azimuth mask B overlap each other + a region that is not included in the azimuth mask B and is only included in the azimuth mask A + a region that is not included in the azimuth mask A and is only included in the azimuth mask B).

According to Example 2, even in a case where the satellite signal is blocked by the slope or the received quality deteriorates, it is possible to perform positioning and time synchronization with high accuracy.

### Example 3

Next, Example 3 will be described. Example 3 can be applied in combination with any of Examples 1 and 2. Hereinafter, differences from Examples 1 and 2 will be mainly described.

According to Examples 1 and 2 described so far, it is possible to perform positioning and time synchronization based on the GNSS with high accuracy even in a case where the azimuth and the inclination of the object 10 change.

However, the absolute position obtained by positioning is the position of the phase center of the GNSS antenna 110. Thus, for example, in a case where the GNSS antenna 110 installed on the object 10 and a certain component of the object 10 are separated from each other, a problem is that the absolute position of the component cannot be accurately detected from the positioning result alone. For example, in a case where the object 10 is inclined, the absolute position of the component cannot be detected.

The component is, for example, a probe for underground surveying which is attached to the object 10. When the position of the probe for underground surveying is not known, it is not possible to know the position of the ground surface under which the surveying is performed. Thus, it is necessary to accurately know the position of the probe for underground surveying. The component may be a camera (pixel), an arm of a construction machine, a heavy machine, or a robot, or the like in addition to a sensing device such as the probe for underground surveying.

Accordingly, in Example 3, a relative positional relationship between the phase center of the GNSS antenna 110 and the component of the object 10 (the component for which the position is to be detected) is held in advance, and the absolute position of the component is calculated based on the positional relationship, the measurement result of the azimuth and the inclination of the object 10, and the positioning result of the absolute position of the object 10.

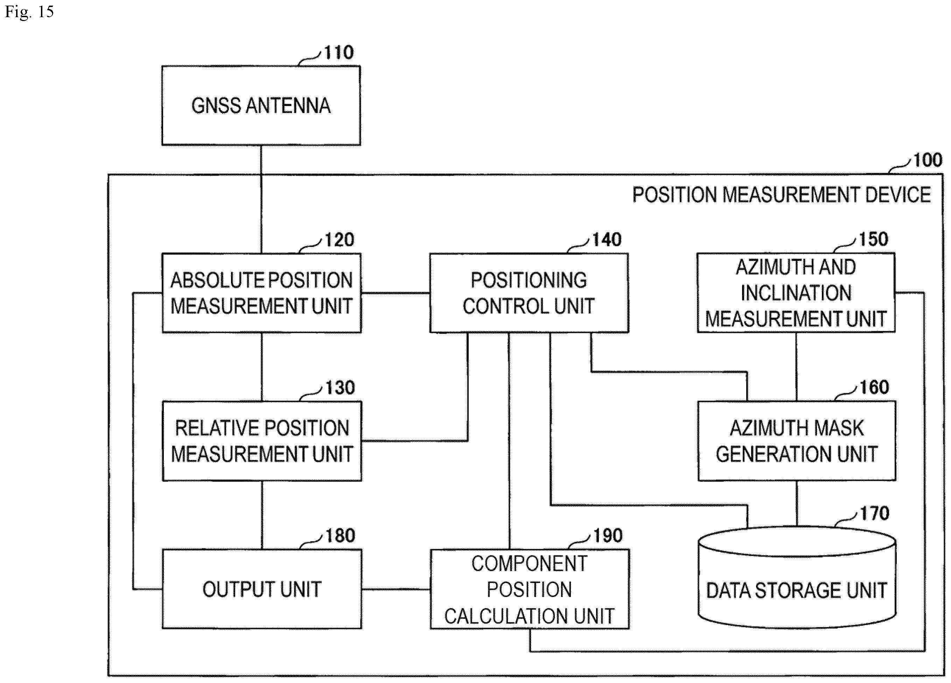

Fig. 15 illustrates a configuration of the position measurement device 100 mounted in the object 10 in Example 3. As illustrated in Fig. 15, the position measurement device 100 of Example 3 includes the GNSS antenna 110, the absolute position measurement unit 120, the relative position measurement unit 130, the positioning control unit 140, the azimuth and inclination measurement unit 150, the azimuth mask generation unit 160, the data storage unit 170, the output unit 180, and a component position calculation unit 190.

As illustrated in Fig. 15, the position measurement device 100 of Example 3 has a configuration in which the component position calculation unit 190 is added to the position measurement device 100 of Example 1 (and Example 2). The operations of functional units other than the component position calculation unit 190 are the same as the operations in Example 1 (and Example 2).

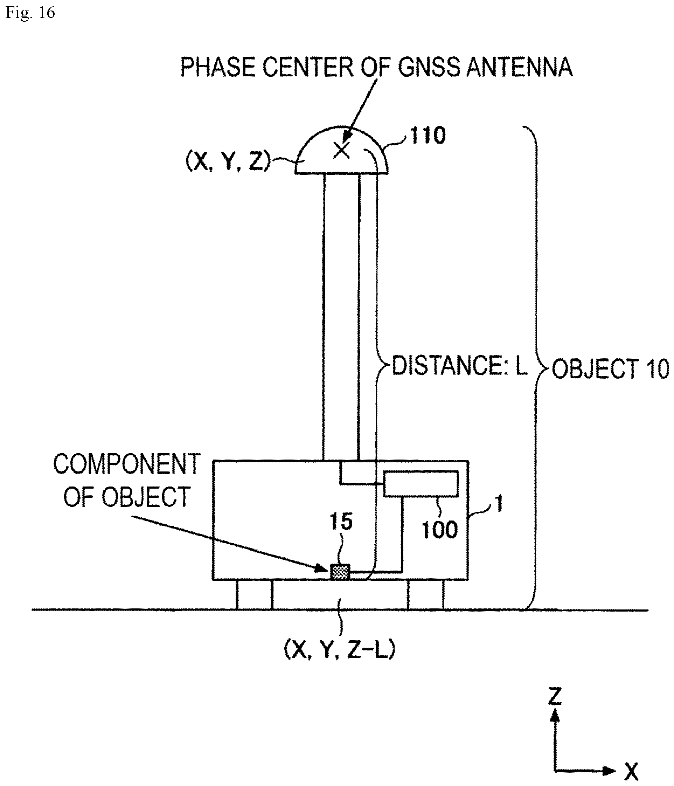

In Example 3, the object 10 is assumed to be an object having a shape illustrated in Fig. 16. That is, as illustrated in Fig. 16, the object 10 has a structure in which the GNSS antenna 110 is fixed to an upper portion of the moving object 1 and includes a component 15, the position of which is to be detected. In addition, the position measurement device 100 is provided. Note that, Fig. 16 illustrates a case where the object 10 is placed on a horizontal plane.

The data storage unit 170 in Example 3 stores information indicating a relative positional relationship between the phase center of the GNSS antenna 110 and the component 15 of the object 10. In the case of the object 10 illustrated in Fig. 16, as the positional relationship, information indicating "the phase center of the GNSS antenna 110 and the component 15 are on a straight line perpendicular to the bottom surface of the object 10 (a plane parallel to the ground), and a distance between the phase center of the GNSS antenna 110 and the component 15 is L" is stored in the data storage unit 170.

In this case, for example, as illustrated in Fig. 16, assuming that the positioning result of the absolute position measurement unit 120 (that is, the position of the GNSS antenna 110) is (X, Y, Z) and that the measurement result of the inclination in the measurement result obtained by the azimuth and inclination measurement unit 150 is 0 degree (the object 10 is on a horizontal plane), the component position calculation unit 190 calculates (X, Y, Z - L) as the position of the component 15. The calculation result is output from the output unit 180 and is input to, for example, the component 15 (such as a sensor).

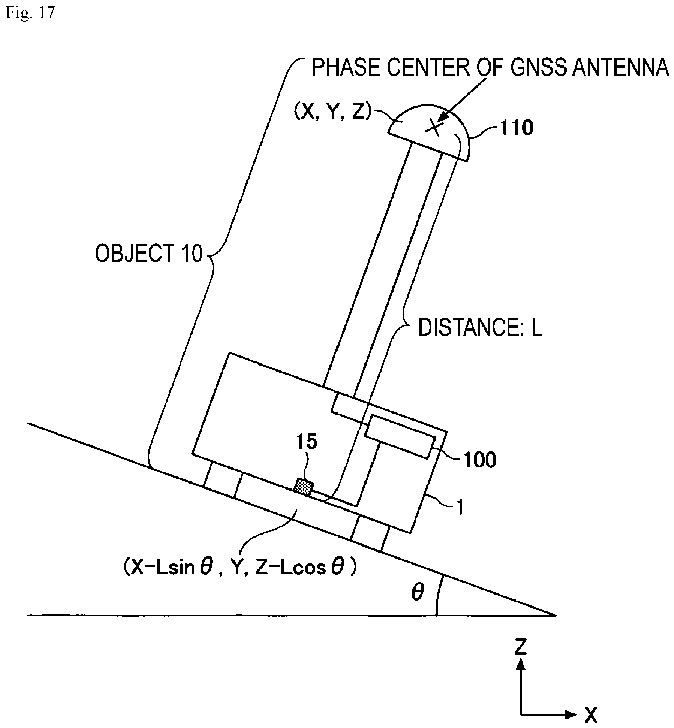

In addition, for example, as illustrated in Fig. 17, assuming that the positioning result of the absolute position measurement unit 120 (that is, the position of the GNSS antenna 110) is (X, Y, Z) and that the measurement result of the inclination in the measurement result obtained by the azimuth and inclination measurement unit 150 is θ degrees (the object 10 is on the slope with an inclination θ), the component position calculation unit 190 calculates (X - Lsinθ, Y, Z - Lcosθ) as the position of the component 15. The calculation result is output from the output unit 180 and is input to, for example, the component 15 (such as a sensor).

Note that, Fig. 17 illustrates an example of a case where the slope is inclined in an X direction, but the absolute position of the component 15 can be calculated similarly at an inclination in any direction.

According to Example 3, it is possible to accurately calculate the absolute position of any component of the object 10.

### Hardware Configuration Example

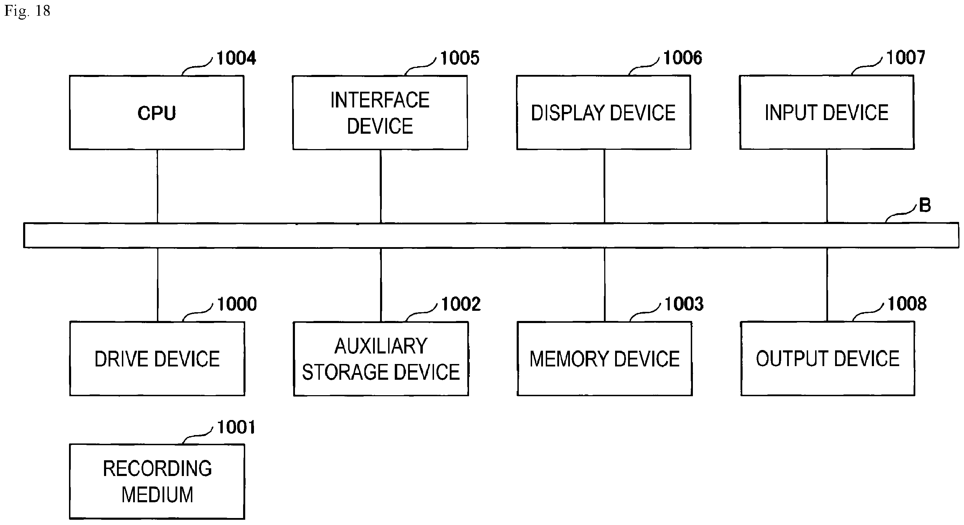

Fig. 18 is a diagram illustrating an example of a hardware configuration of a computer that can be used as the position measurement device 100 in the embodiment of the present disclosure. The computer illustrated in Fig. 18 includes a drive device 1000, an auxiliary storage device 1002, a memory device 1003, a CPU 1004, an interface device 1005, a display device 1006, an input device 1007, an output device 1008, and the like which are connected to each other through a bus B.

Note that, in a case where the function of the position measurement device 100 is implemented by a computer as illustrated in Fig. 18, the computer executes processing of the positioning control unit 140, the azimuth mask generation unit 160, the data storage unit 170, and the output unit 180, and the other functional units (the GNSS antenna 110, the absolute position measurement unit 120, the relative position measurement unit 130, and the azimuth and inclination measurement unit 150) may be functional units outside the computer. In addition, in a case where the operation of Example 3 is performed, the computer may perform processing of the component position calculation unit 190.

A program for executing processing in the computer is provided by a recording medium 1001 such as, for example, a CD-ROM or a memory card. When the recording medium 1001 having a program stored therein is set in the drive device 1000, the program is installed from the recording medium 1001 through the drive device 1000 to the auxiliary storage device 1002. However, the program does not necessarily have to be installed from the recording medium 1001, and may be downloaded from another computer through a network. The auxiliary storage device 1002 stores the installed program, and stores necessary files, data, and the like.

In response to an activation instruction of a program, the memory device 1003 reads out the program from the auxiliary storage device 1002 and stores the program. The CPU 1004 implements functions relevant to the positioning control unit 140, the azimuth mask generation unit 160, the data storage unit 170, and the output unit 180 in accordance with the program stored in the memory device 1003. The interface device 1005 is used as an interface for connection to a network. The display device 1006 displays a graphical user interface (GUI) or the like based on the program. The input device 1007 includes a keyboard, a mouse, a button, a touch panel, or the like, and is used for inputting various operation instructions. The output device 1008 outputs the calculation result.

### Advantageous Effects of Embodiment

As described above, according to the embodiment of the present disclosure, it is possible to perform positioning and time synchronization with high accuracy even in a case where satellite signals are blocked by a structure or the like in the vicinity of the installation position of the GNSS antenna.

### Conclusion of Embodiment

In the present embodiment, at least a measurement device, a measurement method, and a program are provided which are described in the following paragraphs.

### [Paragraph 1]

A measurement device including:
an azimuth and inclination measurement unit that measures an azimuth and an inclination of an object including a GNSS antenna;
an azimuth mask generation unit that generates an azimuth mask indicating a region blocked when viewed from the GNSS antenna in a region of an open space of a sky in accordance with the azimuth and the inclination of the object; and
a positioning control unit that selects a line-of-sight satellite signal using the azimuth mask and causes an absolute position measurement unit to execute positioning or time synchronization using the line-of sight satellite signal.

### [Paragraph 2]

The measurement device according to paragraph 1, wherein
the azimuth mask generation unit generates the azimuth mask indicating the region blocked by a structure included in the object.

### [Paragraph 3]

The measurement device according to paragraph 2, wherein
the azimuth mask generation unit generates the azimuth mask based on mask data and the azimuth and inclination of the object, the mask data being data relatively representing the region blocked by the structure relative to the object.

### [Paragraph 4]

The measurement device according to any one of paragraphs 1 to 3, wherein
the azimuth mask generation unit generates an azimuth mask indicating a region blocked by a slope where the object is located or an azimuth mask indicating a region where received quality of the GNSS antenna deteriorates due to an inclination of the object caused by the slope.

### [Paragraph 5]

The measurement device according to any one of paragraphs 1 to 4, further including
a component position calculation unit configured to calculate an absolute position of a component of the object based on a relative positional relationship between the component and the GNSS antenna and a positioning result of the absolute position measurement unit.

### [Paragraph 6]

A measurement method executed by a measurement device, the measurement method including:
measuring an azimuth and an inclination of an object including a GNSS antenna;
generating an azimuth mask indicating a region blocked when viewed from the GNSS antenna in a region of an open space of a sky in accordance with the azimuth and the inclination of the object; and
selecting a line-of sight satellite signal using the azimuth mask and causing an absolute position measurement unit to execute positioning or time synchronization using the line-of sight satellite signal.

### [Paragraph 7]

A program for causing a computer to operate as the azimuth mask generation unit and the positioning control unit in the measurement device according to any one of paragraphs 1 to 5.

Although the present embodiment has been described above, the present disclosure is not limited to such a specific embodiment, and can be modified and changed variously without departing from the scope of the present disclosure described in the appended claims.

### Reference Signs List

1 Moving object
2 Structure
10 Object
15 Component
100 Position measurement device
110 GNSS antenna
120 Absolute position measurement unit
130 Relative position measurement unit
140 Positioning control unit
150 Azimuth and inclination measurement unit
160 Azimuth mask generation unit
170 Data storage unit
180 Output unit
190 Component position calculation unit
1000 Drive device
1001 Recording medium
1002 Auxiliary storage device
1003 Memory device
1004 CPU
1005 Interface device
1006 Display device
1007 Input device
1008 Output device

## Claims

1. A measurement device comprising:
an azimuth and inclination measurement unit configured to measure an azimuth and an inclination of an object including a GNSS antenna;
an azimuth mask generation unit configured to generate an azimuth mask indicating a region blocked when viewed from the GNSS antenna in a region of an open space of a sky in accordance with the azimuth and the inclination of the object; and
a positioning control unit configured to select a line-of sight satellite signal using the azimuth mask and cause an absolute position measurement unit to execute positioning or time synchronization using the line-of sight satellite signal.

2. The measurement device according to claim 1, wherein
the azimuth mask generation unit generates the azimuth mask indicating the region blocked by a structure included in the object.

3. The measurement device according to claim 2, wherein
the azimuth mask generation unit generates the azimuth mask based on mask data and the azimuth and the inclination of the object, the mask data being data relatively representing the region blocked by the structure relative to the object.

4. The measurement device according to any one of claims 1 to 3, wherein
the azimuth mask generation unit generates an azimuth mask indicating a region blocked by a slope where the object is located or an azimuth mask indicating a region where received quality of the GNSS antenna deteriorates due to the inclination of the object caused by the slope.

5. The measurement device according to any one of claims 1 to 4, further comprising:
a component position calculation unit configured to calculate an absolute position of a component of the object based on a relative positional relationship between the component and the GNSS antenna and a positioning result of the absolute position measurement unit.

6. A measurement method executed by a measurement device, the measurement method comprising:
measuring an azimuth and an inclination of an object including a GNSS antenna;
generating an azimuth mask indicating a region blocked when viewed from the GNSS antenna in a region of an open space of a sky in accordance with the azimuth and the inclination of the object; and
selecting a line-of sight satellite signal using the azimuth mask and causing an absolute position measurement unit to execute positioning or time synchronization using the line-of sight satellite signal.

7. A program for causing a computer to operate as the azimuth mask generation unit and the positioning control unit in the measurement device according to any one of claims 1 to 5.
